# EUROPÄISCHE PATENTSCHRIFT

(11) **EP 3 478 919 B1**
(45) Veröffentlichungstag und Bekanntmachung des Hinweises auf die Patenterteilung: **06.11.2024**
(21) Anmeldenummer: 17737502.9
(22) Anmeldetag: 27.06.2017
(51) Int. Cl.: E06B 3/02, E06B 5/16, E05B 65/00, B32B 17/06, E06B 3/70

(54) **BRANDSCHUTZGLASTÜR MIT EINEM SCHLOSSKASTEN**
GLASS FIRE PROTECTION DOOR HAVING A LOCK CASE
PORTE DE VERRE IGNIFUGE AYANT UN PALASTRE

(30) Priorität: 01.07.2016 DE 202016103533 U
(43) Veröffentlichungstag der Anmeldung: 08.05.2019
(73) Patentinhaber: Etex Building Performance Germany GmbH, 40878 Ratingen (DE)
(72) Erfinder: WIEDEMANN, Günter, 40629 Düsseldorf (DE)
(74) Vertreter: Etex Services NV - Etex IPSC
(86) Internationale Anmeldenummer: PCT/EP2017/065783
(87) Internationale Veröffentlichungsnummer: WO 2018/002006

(56) Entgegenhaltungen:
- DE-A1- 102004 055 803
- DE-A1- 4 123 977
- DE-C1- 4 400 196
- DE-U1- 202008 016 782
- DE-U1- 202008 016 782

## Beschreibung

Die vorliegende Erfindung betrifft eine Brandschutzglastür zur Vermeidung des Durchtritts von Feuer und/oder Rauch im Brandfall von einem Raum in einen anderen Raum, mit einer Brandschutzscheibe, bestehend aus wenigstens zwei mittels eines Randverbunds parallel voneinander beabstandeten Glasscheiben und wenigstens einem zwischen den wenigstens zwei Glasscheiben angeordneten Brandschutzmaterial, und einem in einem Glasausschnitt der Brandschutzscheibe angeordneten bzw. anordbaren, insbesondere ein Einsteckschloss aufweisenden Schlosskasten.

Die vorliegende Erfindung betrifft weiter eine Brandschutzglastür zur Vermeidung des Durchtritts von Feuer und/oder Rauch im Brandfall von einem Raum in einen anderen Raum, mit einer Brandschutzscheibe, bestehend aus wenigstens drei parallel voneinander beabstandeten Glasscheiben und wenigstens einem zwischen den Glasscheiben angeordneten Brandschutzmaterial, und einem in einem Glasausschnitt der Brandschutzscheibe angeordneten bzw. anordbaren, insbesondere ein Einsteckschloss aufweisenden Schlosskasten.

Aus dem Stand der Technik sind Ganzglastüren mit Brandschutzeigenschaften, nachfolgend auch Brandschutzglastür genannt, bekannt. Die DE 20 2011 106 510 U1 offenbart eine Brandschutzverglasung mit einer Brandschutzglastür. In der Brandschutzglastür ist ein Schlosskasten mit einem Türdrücker vorgesehen. Der Schlosskasten weist zwei Gehäusehälften auf, die einander gegenüberliegend auf den äußeren Seitenflächen der Brandschutzscheibe fixiert sind. In einer dieser aufgesetzten Gehäusehälften des Schlosskastens ist ein Schließmechanismus untergebracht. Nachteilig ist bei einer solchen Konstruktion, dass die Gehäusehälften zum Teil stark auf der parallel zu den Seitenflächen der Brandschutzscheibe verlaufenden Oberfläche der Brandschutzscheibe auftragen und optisch störend sind.

Die DE 20 2011 106 509 U1 und die DE 20 2011 106 522 U1 offenbaren eine ein- oder zweiflügelig ausgestaltete Brandschutzglastür in der ein Pendelschloss angebracht ist. Die Brandschutzscheibe der Brandschutzglastür ist zur Aufnahme des Schlosskastens des Pendelschlosses mit einer entsprechend passenden Aussparung bzw. Ausschnitt versehen. Dazu muss bei dieser Konstruktion in den Glasscheiben der Brandschutzscheibe ein passgenau zu den Maßen des Schlosskastens ausgebildeter Glasausschnitt vorgesehen werden, dessen Herstellung insbesondere bei Verwendung von Einscheiben-Sicherheitsglas für die Glasscheiben der Brandschutzscheibe aufwändig ist. Die Aufnahme des Schlosskastens erfolgt dabei zwar derart, dass nur ein Teil des Schließmechanismus auf der parallel zu den Seitenflächen der Brandschutzscheibe verlaufenden Oberfläche der Brandschutzscheibe aufträgt, aber auch dieser Teil des Schließmechanismus kann als optisch störend empfunden werden, insbesondere da demzufolge kein oberflächlich glattes Erscheinungsbild im Bereich des Schlosskastens gegeben ist.

Nachteilig bei den aus dem Stand der Technik bekannten Brandschutzglastüren ist ferner, dass der Schlosskasten in der Regel aus wärmeleitenden Materialien gefertigt bzw. zusammengesetzt ist, und insbesondere im Brandfall einen Wärme- bzw. Hitzeübergang von der brandzugewandten Seite der Brandschutzglastür zur brandabgewandten Seite der Brandschutzglastür, eine sogenannte Wärmebrücke bildet, welcher die Brandschutzeigenschaften der Brandschutzglastür insbesondere hinsichtlich deren Feuerwiderstandszeit beeinträchtigt. Darüber hinaus sind die bisher bekannten Schlosskästen hinsichtlich ihrer baulichen Abmessungen relativ groß, insbesondere auch um die auf sie in der Funktion einwirkenden Kräfte beim Öffnen bzw. Schließen sicher und stabil aufnehmen zu können. Hierdurch wird jedoch die zur Verfügung stehende Lichtdurchtrittsfläche der bekannten Brandschutzglastüren nachteiliger Weise verringert. Der Einbau der bisher bekannten Schlosskastenlösungen erfolgt ferner zumindest teilweise über in den Glasscheiben der Brandschutzscheibe ausgebildete Löcher, mit den Nachteilen der entsprechend erforderlichen Herstellung selbiger.

Eine Brandschützglastür der hieroben beschriebenen Art ist bekannt aus DE 10 2004 055 803 A1. Der Glasausschnitt der bekannten Glastür ist derart ausgebildet, dass nur die eine Glasscheibe einen Ausschnitt umfasst, die zweite gegenüberliegende Glasscheibe aber ununterbrochen ist und als Träger dient. Der Schlosskasten wird dann zu dem Träger montiert.

DE 41 23 977 A1 beschreibt eine Brandschutzglastür mit einer Brandschutzscheibe bestehend aus drei parallel voneinander beabstandeten Glasscheiben und einem zwischen den Glasscheiben angeordneten Brandschutzmaterial, wobei ein Schlosskasten an der mittlere, gegenüber den Stirnflächen der beiden äußeren Glasscheiben vorspringende, Glasscheibe befestigt ist.

Der vorliegenden Erfindung liegt die Aufgabe zugrunde, eine Brandschutzglastür der eingangs genannten Art bereit zu stellen, bei der ein insbesondere ein Einsteckschloss aufweisender Schlosskasten auf einfache Art und Weise und optisch möglichst unauffällig montiert bzw. montierbar ist und darüber hinaus hinsichtlich eines Wärme- bzw. Hitzeübergangs bzw. - durchgangs, insbesondere im Brandfall von der brandzugewandten zur brandabgewandten Seite, verbessert ist.

Zur technischen Lösung wird mit der vorliegenden Erfindung eine Brandschutzglastür nach Anspruch 1 bereitgestellt, und als alternative, zweite Ausgestaltung, eine Brandschutzglastür nach Anspruch 10.

Gemäß der ersten Ausgestaltung der Erfindung ist vorgesehen, dass der Randverbund der Brandschutzscheibe zumindest in dem für den Schlosskasten vorgesehenen Bereich des Glasausschnitts der Brandschutzscheibe wenigstens teilweise gegenüber den Stirnflächen zumindest der äußeren zwei Glasscheiben der Brandschutzscheibe zurückspringt und der Schlosskasten an wenigstens einer seiner der Brandschutzscheibe in im Glasausschnitt der Brandschutzscheibe angeordneten Zustand des Schlosskastens zugewandten Außenseiten wenigstens zwei parallel voneinander beabstandete Aussparungen und/oder Vertiefungen aufweist, in welchen die zumindest äußeren zwei Glasscheiben der Brandschutzscheibe in im Glasausschnitt der Brandschutzscheibe angeordneten Zustand des Schlosskastens formschlüssig und/oder kraftschlüssig aufgenommen sind.

Erfindungsgemäß ist der Schlosskasten modulartig in den Glasausschnitt der Brandschutzscheibe einsetzbar, indem dieser von der Seite der Brandschutzscheibe her in den Glasausschnitt der Brandschutzscheibe eingeschoben wird. Dabei ist der Schlosskasten mit seinen Aussparungen und/oder vorteilhafterweise schlitzartig ausgebildeten Vertiefungen, in welche die Glasscheiben der Brandschutzscheibe anliegen und/oder eingreifen, im Glasausschnitt der Brandschutzscheibe schienenartig geführt und wird in im Glasausschnitt der Brandschutzscheibe vollständig angeordneten Zustand formschlüssig und/oder kraftschlüssig aufgenommen. Hierdurch ist auf eine einfache Art und Weise eine vereinfachte und optisch möglichst unauffällige Montage eines Schlosskastens ermöglicht, insbesondere da dieser hinsichtlich seiner Tiefe und/oder Höhe - und damit dementsprechend auch die Tiefe und/oder Höhe des Glasausschnitts in der Brandschutzscheibe - kleiner ausgestaltbar ist, insbesondere da der Schlosskasten vorzugsweise im gesamten Randbereich des Glasausschnitts der Brandschutzscheibe gehalten und geführt ist. Durch die geringere Tiefe und/oder Höhe des Schlosskastens - und damit dementsprechend auch des Glasausschnitts in der Brandschutzscheibe - ist neben einem vergrößerten Lichtdurchtritt durch die Brandschutzscheibe der Brandschutzglastür ferner auch eine Verbesserung hinsichtlich eines Wärme- bzw. Hitzeübergangs bzw. -durchgangs im Brandfall von der brandzugewandten zur brandabgewandten Seite erzielbar, da der insofern kleiner ausgestaltete Schlosskasten selbst auch dementsprechend weniger als eventuelle Wärmebrücke dienen kann.

Der erfindungsgemäß angewendete Schlosskasten ist dann im Weiteren mit dem insbesondere innenliegenden Einsteckschloss als auch mit Türdrücker und/oder Schließzylinder, eventuell erforderlichen oder gewünschten Abdeckungen bzw. Verblendungen, und/oder dergleichen Elemente versehbar. Erfindungsgemäß ist ferner vorgesehen, dass der erfindungsgemäß angewendete Schlosskasten bereits ein insbesondere innenliegendes Einsteckschloss aufweist.

Vorteilhafterweise ist der Schlosskasten mit der Brandschutzscheibe verklebt. Die Verklebung erfolgt vorzugsweise mit den zumindest äußeren zwei Glasscheiben und/oder dem Randverbund der Brandschutzscheibe. Der Kleber für die Verklebung ist vorzugsweise ein Silikon, insbesondere ein Zwei-Komponenten Silikon, und beinhaltet besonders vorzugsweise ein intumeszierendes Material. Für die Verklebung eignet sich vorteilhafterweise ein pastöser Hochtemperaturkleber. Der Kleber kann alternativ und/oder ergänzend ferner ein Butylkleber sein.

Eine vorteilhafte Ausgestaltung der Erfindung sieht vor, dass der Randverbund der Brandschutzscheibe einen randseitig umlaufenden Abstandhalter aufweist. Derartige Abstandhalter finden insbesondere - aber nicht ausschließlich - bei mit einem Brandschutzgel gefüllten Brandschutzscheiben Verwendung. Vorteilhafterweise ist die Brandschutzscheibe derart ausgebildet, dass diese der DIN 4102 beziehungsweise DIN EN 13501 genügt bzw. diese erfüllt. Eine solche für Rauch- und/oder Brandschutzzwecke geeignete Brandschutzscheibe verhindert vorteilhafterweise den Durchgang von Feuer und/oder Rauch von einem Brandabschnitt bzw. Raum in einen anderen Brandabschnitt bzw. Raum. Im Brandfall wird die Brandschutzschicht zwischen den parallelen Glasscheiben aktiviert, wodurch die Wärmestrahlung absorbiert wird und eine hochwirksame Dämmschicht gebildet wird.

Vorteilhafterweise sind bei der ersten Ausgestaltung der vorliegenden Erfindung Brandschutzscheiben gemäß der sogenannten Gel-Technologie verwendbar. Bei einer Brandschutzscheibe nach der Gel-Technologie ist die zwischen zwei Glasscheiben angeordnete Brandschutzschicht, welche im Brandfall aktiviert wird, aus gelartigen Materialien gebildet, insbesondere organischen Polymeren. Bei der Gel-Technologie sind die beiden Glasscheiben der Brandschutzscheibe mittels eines einen Randverbund ausbildenden profilartigen Abstandhalters voneinander beabstandet angeordnet.

Vorteilhafterweise sind bei der zweiten Ausgestaltung der vorliegenden Erfindung Brandschutzscheiben gemäß der sogenannten Wasserglas-Technologie. Bei einer Brandschutzscheibe nach der Wasserglas-Technologie finden als Brandschutzschicht jeweils zwischen einer Vielzahl von Glasscheiben angeordnete, insbesondere eine Alkalisilikatmasse enthaltende Materialien Verwendung, welche im Brandfall als Schaumbildner wirken und aufschäumen.

Für die bevorzugt eingesetzten, mit einem Brandschutzgel gefüllten Brandschutzscheiben kommen erfindungsgemäß sämtliche Arten von Glasscheiben in Frage. Vorzugsweise besteht jedoch zumindest eine der Glasscheiben aus Sicherheitsglas, insbesondere aus Einscheibensicherheitsglas oder Verbundsicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor einem direkten Flammenkontakt schützen. Da Einscheibensicherheitsglas nach dem Vorspannen nicht mehr geschnitten werden kann, müssen die Aussparungen für die Anbringung von Scharnieren, Schlössern und dergleichen bereits vor dem Vorspannen in den Glasscheiben vorgesehen werden. Erfindungsgemäß lassen sich jedoch ebenso andere Glasscheiben verwenden, wie Floatglas.

Eine weitere vorteilhafte Weiterbildung der ersten Ausgestaltung der Erfindung sieht vor, dass der Randverbund bzw. der Abstandhalter der Brandschutzscheibe zumindest in dem für den Schlosskasten vorgesehenen Bereich des Glasausschnitts der Brandschutzscheibe wenigstens teilweise wenigstens einen Vorsprung und/oder wenigstens eine Ausnehmung aufweist, welche mit wenigstens einer korrespondierend ausgebildeten Ausnehmung und/oder wenigstens einem korrespondierend ausgebildeten Vorsprung seitens wenigstens einer der der Brandschutzscheibe in im Glasausschnitt der Brandschutzscheibe angeordneten Zustand des Schlosskastens zugewandten Außenseiten des Schlosskastens in im Glasausschnitt der Brandschutzscheibe angeordneten Zustand des Schlosskastens formschlüssig und/oder kraftschlüssig zusammenwirken. Die Ausnehmungen bzw. Vorsprünge seitens des Abstandshalters der Brandschutzscheibe und seitens der Außenseiten des Schlosskastens können dabei in Längserstreckungsrichtung vorteilhafterweise entweder abschnittsweise oder über die gesamte vorgesehen sein. Die erfindungsgemäße Ausgestaltung ermöglicht aufgrund der zusammenwirkenden Ausnehmungen bzw. Vorsprünge seitens des Abstandshalters der Brandschutzscheibe und seitens der Außenseiten des Schlosskastens vorteilhafterweise eine noch stabilere und sicherere Aufnahme und Halterung des Schlosskastens im Glasausschnitt der Brandschutzscheibe. Darüber hinaus ist durch die zusammenwirkenden Ausnehmungen bzw. Vorsprünge seitens des Abstandshalters der Brandschutzscheibe und seitens der Außenseiten des Schlosskastens vorteilhafterweise wenigstens eine weitere Dichtungsebene bzw. Dichtungsstufe und damit eine weiter verbesserte Abdichtung erzielbar.

Eine weitere Ausgestaltung der Erfindung sieht vor, dass die in im Glasausschnitt der Brandschutzscheibe angeordneten Zustand des Schlosskastens parallel zu den Seitenflächen der Brandschutzscheibe verlaufenden Außenseiten des Schlosskastens gegenüber den Seitenflächen der Brandschutzscheibe überstehen oder flächenbündig mit den Seitenflächen der Brandschutzscheibe abschließen. Dabei ist vorteilhafterweise auch vorgesehen, dass eine parallel zu den Seitenflächen der Brandschutzscheibe verlaufende Außenseite des Schlosskastens gegenüber der korrespondierenden Seitenfläche der Brandschutzscheibe übersteht und die andere parallel zu den Seitenflächen der Brandschutzscheibe verlaufende Außenseite des Schlosskastens mit der korrespondierenden Seitenfläche der Brandschutzscheibe abschließt. Eine weitere Ausgestaltung der Erfindung sieht vor, dass eine Außenseite des Schlosskastens gegenüber der anderen Außenseite des Schlosskastens übersteht, vorzugsweise in Richtung senkrecht zu den Seitenflächen der Brandschutzscheibe verlaufend.

In einer weiteren Ausgestaltung der Erfindung sind die parallel zu den Seitenflächen der Brandschutzscheibe verlaufenden Außenseiten des Schlosskastens jeweils mit einer vorzugsweise im Wesentlichen plattenartig ausgebildeten Abdeckung bzw. Verblendung versehen bzw. versehbar, wobei die Abdeckung bzw. Verblendung den Schlosskasten und vorzugsweise den Randverbund der Brandschutzscheibe im Bereich des Glasausschnitts der Brandschutzscheibe abdeckt bzw. verblendet. Vorteilhafterweise ist die Abdeckung bzw. Verblendung mittels durch den Schlosskasten hindurch geführten Schrauben befestigbar. Dabei Klemmen sich die Abdeckungen bzw. Verblendungen mittels der Schrauben gegeneinander. Die Abdeckung bzw. Verblendung ist vorzugsweise aus Edelstahl und/oder weist zumindest eine optischen Gründen genügende Oberfläche bzw. Oberflächenbeschichtung auf.

Eine vorteilhafte Ausgestaltung der Erfindung sieht vor, dass der Schlosskasten isolierende bzw. wärmedämmende und/oder hitzeabsorbierende Eigenschaften aufweist. Eine besonders vorteilhafte Ausgestaltung der Erfindung sieht vor, dass der Schlosskasten aus und/oder mit einem isolierenden bzw. wärmedämmendem und/oder hitzeabsorbierenden Material bzw. Baustoff gefertigt ist. Hierdurch wird ein Wärme- bzw. Hitzeübergang bzw. -durchgang, insbesondere im Brandfall von der brandzugewandten Seite der Brandschutzglastür zur brandabgewandten Seite der Brandschutzglastür weiter verbessert, insbesondere da bei einer solchen erfindungsgemäßen Ausgestaltung der Schlosskasten selbst keine Wärmebrücke darstellt, von welcher Beeinträchtigungen hinsichtlich der Brandschutzeigenschaften der Brandschutzglastür, insbesondere hinsichtlich deren Feuerwiderstandszeit ausgehen könnten. Eine bevorzugte Ausgestaltung der Erfindung sieht vor, dass der Schlosskasten aus einer zementgebundenen Silikat-Brandschutzbauplatte, vorzugsweise Promatect, gefertigt ist.

Eine weitere Ausgestaltung der Erfindung sieht vor, dass der Schlosskasten einteilig oder aus wenigstens zwei, vorzugsweise miteinander verklebten und/oder verschraubten Teilen ausgebildet ist. Der Kleber für die Verklebung ist vorzugsweise ein Silikon, insbesondere ein Zwei-Komponenten Silikon, und beinhaltet besonders vorzugsweise ein intumeszierendes Material. Für die Verklebung eignet sich vorteilhafterweise ein pastöser Hochtemperaturkleber.

Weitere Einzelheiten, Merkmale und/oder Vorteile der Erfindung werden nachfolgend anhand der in den Figuren der Zeichnung dargestellten Ausführungsbeispiele der Erfindung näher erläutert. Dabei zeigen:
- Fig. 1: in einer perspektivischen Explosionsdarstellung den Türschlossbereich eines Ausführungsbeispiels einer erfindungsgemäßen Brandschutzglastür;
- Fig. 1a: eine perspektivische Darstellung gemäß Fig. 1 im montierten Zustand;
- Fig. 2: in einer perspektivischen Explosionsdarstellung den Türschlossbereich eines Ausführungsbeispiels einer erfindungsgemäßen Brandschutzglastür;
- Fig. 2a: eine perspektivische Darstellung gemäß Fig. 2 im montierten Zustand;
- Fig. 3: in einer schematischen Ansicht ein Ausführungsbeispiel eines Schlosskastens der in der erfindungsgemäßen Brandschutzglastür nach Fig. 1 oder Fig. 2 anwendbar ist;
- Fig. 3a bis 3c: jeweils eine Schnittansicht gemäß Fig. 3;
- Fig. 4: in einer Seitenansicht den Türschlossbereich der erfindungsgemäßen Brandschutzglastür nach Fig. 2 bzw. Fig. 2a;
- Fig. 4a und 4b: jeweils eine Schnittansicht gemäß Fig. 4;
- Fig. 4c: eine vergrößerte Darstellung eines Ausschnitts gemäß Fig. 4a;
- Fig. 5: in einer Schnittansicht entsprechend Fig. 4c ein Ausführungsbeispiel einer erfindungsgemäßen Brandschutzglastür nach der ersten Ausgestaltung der Erfindung; und
- Fig. 6: in einer Schnittansicht entsprechend Fig. 4c ein Ausführungsbeispiel einer erfindungsgemäßen Brandschutzglastür nach der zweiten Ausgestaltung der Erfindung.

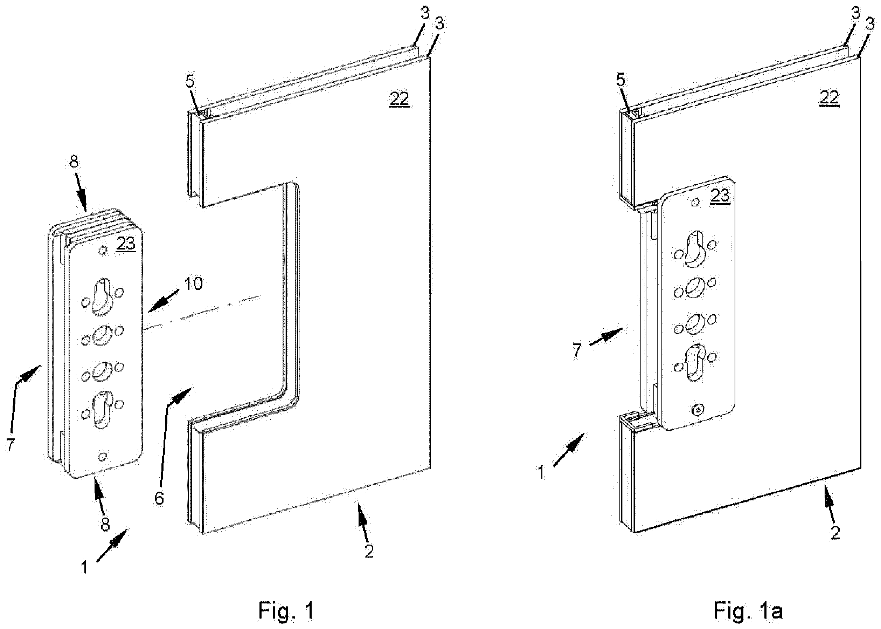

In Fig. 1 ist der Türschlossbereich einer Brandschutzglastür 1 nach der ersten Ausgestaltung der Erfindung ausschnittsweise dargestellt. Die Brandschutzglastür 1 weist eine Brandschutzscheibe 2 auf, die aus zwei mittels eines Randverbunds parallel voneinander beabstandeten Glasscheiben 3, vorzugsweise aus Einscheibensicherheitsglas, und einem zwischen den wenigstens zwei Glasscheiben 3 angeordneten Brandschutzmaterial 4, vorzugsweise einem Brandschutzgel, besteht. Der Randverbund der Brandschutzscheibe 2 ist dabei von bzw. mit einem zwischen den Glasscheiben 3 randseitig umlaufenden Abstandshalter 5 ausgebildet, welcher mit den Glasscheiben 3 verklebt ist. Die Brandschutzscheibe 2 der Brandschutzglastür 1 weist einen im Wesentlichen rechteck- bzw. quaderförmigen Glasausschnitt 6 auf, in welchen ein im Wesentlichen rechteck- bzw. quaderförmiger Schlosskasten 7 anordbar ist.

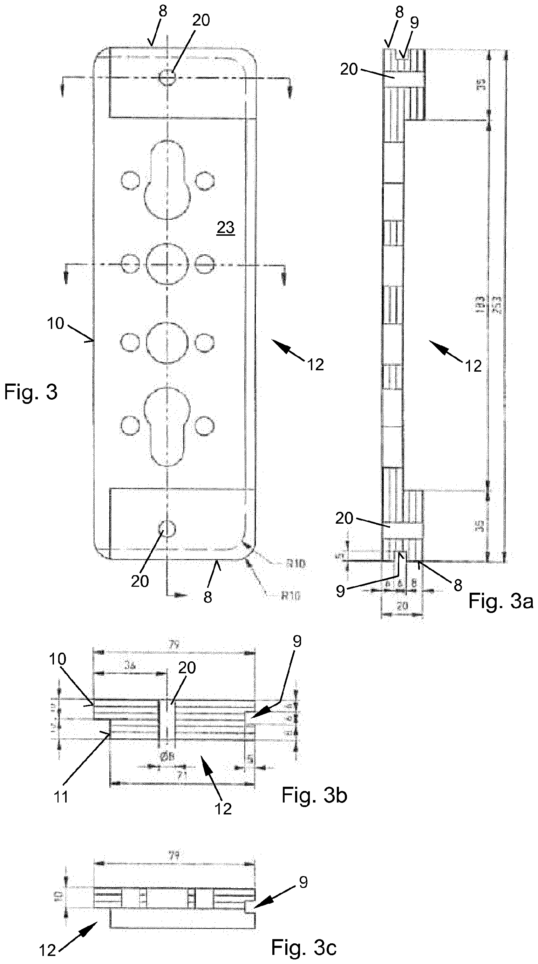

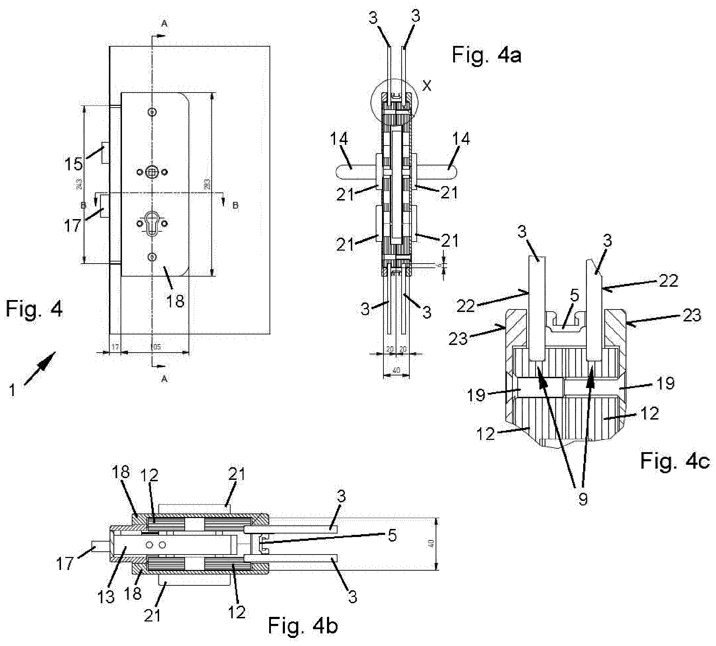

Wie insbesondere auch in Fig. 4 und Fig. 4a bis 4c dargestellt, springt der mittels Abstandshalter 5 ausgebildete Randverbund der Brandschutzscheibe 2 in dem für den Schlosskasten 7 vorgesehenen Bereich des Glasausschnitts 6 der Brandschutzscheibe 2 gegenüber den Stirnflächen der beiden Glasscheiben 3 der Brandschutzscheibe 2 zurück, derart, dass die Stirnflächen der beiden Glasscheiben 3 gegenüber dem Abstandshalter 5 vorstehen. Wie insbesondere auch in Fig. 3 und Fig. 3a bis 3c dargestellt, weist der Schlosskasten 7 an seinen der Brandschutzscheibe 2 in im Glasausschnitt 6 der Brandschutzscheibe 2 angeordneten Zustand des Schlosskastens 7 zugewandten, horizontal verlaufenden Außenseiten 8 zwei parallel voneinander beabstandete, vorzugsweise schlitzartig ausgebildete Vertiefungen 9 auf, in welchen die beiden Glasscheiben 3 der Brandschutzscheibe 2 in im Glasausschnitt 6 der Brandschutzscheibe 2 angeordneten Zustand des Schlosskastens 7 formschlüssig und/oder kraftschlüssig eingreifen. Der Schlosskasten 7 weist ferner an seiner der Brandschutzscheibe 2 in im Glasausschnitt 6 der Brandschutzscheibe 2 angeordneten Zustand des Schlosskastens 7 zugewandten, vertikal verlaufenden Außenseite 10 zwei parallel voneinander beabstandete Aussparungen 11 auf, an welchen die beiden Glasscheiben 3 der Brandschutzscheibe 2 in im Glasausschnitt 6 der Brandschutzscheibe 2 angeordneten Zustand des Schlosskastens 7 formschlüssig und/oder kraftschlüssig anliegen.

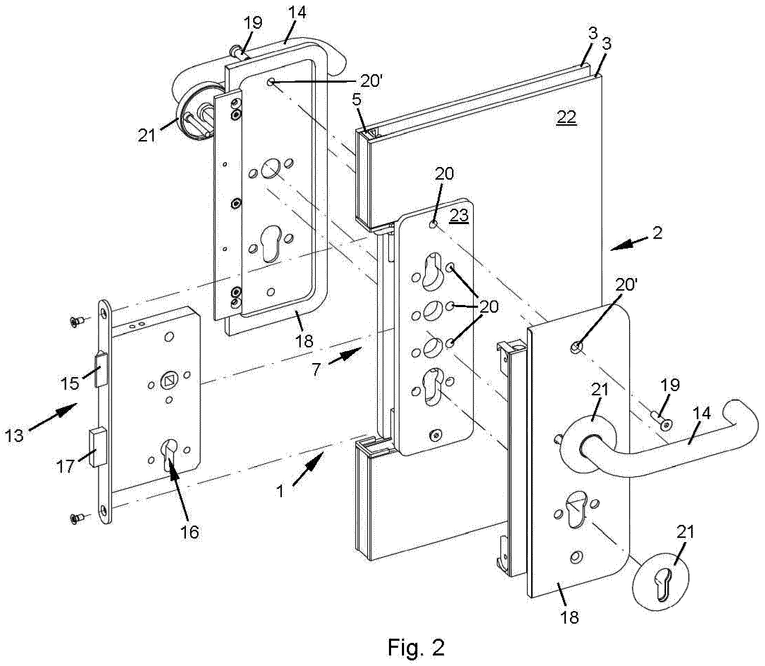

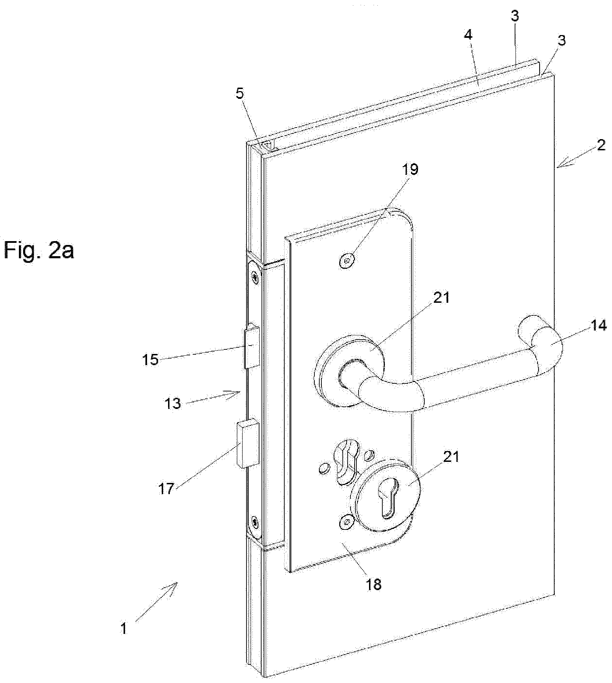

Der Schlosskasten 7 ist, wie insbesondere anhand von Fig. 2, Fig. 3 und Fig. 3a bis 3c erkennbar, aus zwei vorzugsweise miteinander verklebten oder verschraubten halbschalenartigen Teilen 12 ausgebildet, die aus und/oder mit einem isolierenden bzw. wärmedämmendem und/oder hitzeabsorbierenden Material bzw. Baustoff sind. Der Schlosskasten 7 ist so sowohl einfach fertigbar und verhindert eine eventuelle Wärmebrücke.

Zur Montage des Schlosskastens 7 in dem Glasausschnitt 6 der Brandschutzscheibe 2 wird dieser von der Seite her, wie insbesondere anhand von Fig. 1 und Fig. 2 erkennbar, in den Glasausschnitt 6 der Brandschutzscheibe 2 eingeschoben und mit der Brandschutzscheibe 2 verklebt. Dabei ist der Schlosskasten 7 mit seinen Aussparungen 11 und Vertiefungen 9, in welche die Glasscheiben 3 der Brandschutzscheibe 2 anliegen bzw. eingreifen, im Glasausschnitt 6 der Brandschutzscheibe 2 schienenartig geführt und wird in im Glasausschnitt 6 der Brandschutzscheibe 2 vollständig angeordneten Zustand formschlüssig und kraftschlüssig aufgenommen (vgl. Fig. 1a bzw. Fig. 2a).

In dem bzw. durch den Schlosskasten 7 hindurch sind dann im weiteren das insbesondere innenliegende Einsteckschloss 13 mit Falle 15 und Riegel 17, als auch Türdrücker 14, ein Schließzylinder 16 (hier nicht explizit dargestellt) sowie eventuell erforderliche oder gewünschte Abdeckungen bzw. Verblendungen 18 sowie Rundrosetten 21 mittels Schrauben 19 zu montieren. Die Abdeckungen bzw. Verblendungen 18 sind mittels durch den Schlosskasten 7 hindurch geführten Hülsenschrauben 19 befestigbar. Zur Durchführung der Hülsenschrauben 19 weist der Schlosskasten 7 Bohrungen 20 auf. Dabei Klemmen sich die Abdeckungen bzw. Verblendungen 18 mittels der Hülsenschrauben 19 gegeneinander an den Schlosskasten 7 bzw. die Brandschutzscheibe 2. Über den Türdrücker 14 ist die Falle 15 des Einsteckschloss 13 betätigbar. Über den Schließzylinder 16 ist der Riegel 17 des Einsteckschloss 13 betätigbar.

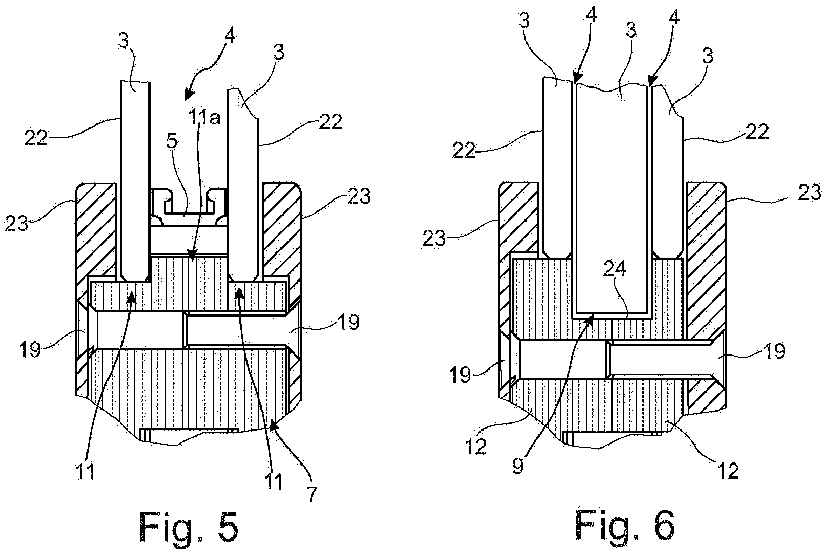

Fig. 5 zeigt wie Fig. 4c in einer vergrößerten Ansicht den Türschlossbereich eines weiteren Ausführungsbeispiels einer erfindungsgemäßen Brandschutzglastür 1 nach der ersten Ausgestaltung der Erfindung. Die Brandschutzglastür 1 weist ebenfalls eine Brandschutzscheibe 2 auf, die aus zwei mittels eines Randverbunds parallel voneinander beabstandeten Glasscheiben 3, vorzugsweise aus Einscheibensicherheitsglas, und einem zwischen den wenigstens zwei Glasscheiben 3 angeordneten Brandschutzmaterial 4, vorzugsweise einem Brandschutzgel, besteht. Der Randverbund der Brandschutzscheibe 2 ist dabei von bzw. mit einem zwischen den Glasscheiben 3 randseitig umlaufenden Abstandshalter 5 ausgebildet, welcher mit den Glasscheiben 3 verklebt ist. Die Brandschutzscheibe 2 der Brandschutzglastür 1 weist einen im Wesentlichen rechteck- bzw. quaderförmigen Glasausschnitt 6 auf, in welchen ein im Wesentlichen rechteck- bzw. quaderförmiger Schlosskasten 7 anordbar ist.

Wie in Fig. 5 weiter erkennbar ist, springt der mittels Abstandshalter 5 ausgebildete Randverbund der Brandschutzscheibe 2 in dem für den Schlosskasten 7 vorgesehenen Bereich des Glasausschnitts 6 der Brandschutzscheibe 2 ebenfalls gegenüber den Stirnflächen der beiden Glasscheiben 3 der Brandschutzscheibe 2 zurück, derart, dass die Stirnflächen der beiden Glasscheiben 3 gegenüber dem Abstandshalter 5 vorstehen. Bei dem in Fig. 5 dargestellten Ausführungsbeispiel der Erfindung weist der Schlosskasten 7 an seinen der Brandschutzscheibe 2 in im Glasausschnitt 6 der Brandschutzscheibe 2 angeordneten Zustand des Schlosskastens 7 zugewandten, horizontal verlaufenden Außenseiten 8 einen Vorsprung 11a auf, welcher in den Raum zwischen den beiden Glasscheiben 3 der Brandschutzscheibe 2 in im Glasausschnitt 6 der Brandschutzscheibe 2 angeordneten Zustand des Schlosskastens 7 formschlüssig und/oder kraftschlüssig eingreift. Der Schlosskasten 7 nach Fig. 5 weist ferner an seiner der Brandschutzscheibe 2 in im Glasausschnitt 6 der Brandschutzscheibe 2 angeordneten Zustand des Schlosskastens 7 zugewandten, vertikal verlaufenden Außenseite 10 einen entsprechend ausgebildeten Vorsprung 11a auf, welcher in den Raum zwischen den beiden Glasscheiben 3 der Brandschutzscheibe 2 in im Glasausschnitt 6 der Brandschutzscheibe 2 angeordneten Zustand des Schlosskastens 7 formschlüssig und/oder kraftschlüssig eingreift (hier nicht explizit dargestellt).

Fig. 6 zeigt wie Fig. 4c und Fig. 5 in einer vergrößerten Ansicht den Türschlossbereich eines Ausführungsbeispiels einer erfindungsgemäßen Brandschutzglastür 1 nach der zweiten Ausgestaltung der Erfindung. Die Brandschutzglastür 1 weist ebenfalls eine Brandschutzscheibe 2 auf, die drei parallel voneinander beabstandeten Glasscheiben 3, vorzugsweise aus Einscheibensicherheitsglas, und einem zwischen den Glasscheiben 3 angeordneten Brandschutzmaterial 4, vorzugsweise einem Brandschutzgel, aufweist. Die Brandschutzscheibe 2 weist dabei vorliegend drei Glasscheiben 3 auf, wobei die mittlere Glasscheibe 3 gegenüber den beiden äußeren Glasscheiben 3 vorsteht. Eine derartige Brandschutzscheibe ist insbesondere gemäß der sogenannten Wasserglas-Technologie ausbildbar. Die Brandschutzscheibe 2 der Brandschutzglastür 1 nach Fig. 6 weist einen im Wesentlichen rechteck- bzw. quaderförmigen Glasausschnitt 6 auf, in welchen ein im Wesentlichen rechteck- bzw. quaderförmiger Schlosskasten 7 anordbar ist.

Wie in Fig. 6 weiter erkennbar ist, springt die mittlere Glasscheibe 3 der drei Glasscheiben 3 der Brandschutzscheibe 2 in dem für den Schlosskasten 7 vorgesehenen Bereich des Glasausschnitts 6 der Brandschutzscheibe 2 gegenüber den Stirnflächen der beiden äußeren Glasscheiben 3 der Brandschutzscheibe 2 vor, derart, dass die Stirnfläche 24 der mittleren Glasscheibe 3 gegenüber den Stirnflächen der beiden äußeren Glasscheiben 3 der Brandschutzscheibe 2 vorsteht. Bei dem in Fig. 6 dargestellten Ausführungsbeispiel der Erfindung weist der Schlosskasten 7 an seinen der Brandschutzscheibe 2 in im Glasausschnitt 6 der Brandschutzscheibe 2 angeordneten Zustand des Schlosskastens 7 zugewandten, horizontal verlaufenden Außenseiten 8 eine Vertiefung 11 auf, in welche die mittlere Glasscheibe 3 der Brandschutzscheibe 2 in im Glasausschnitt 6 der Brandschutzscheibe 2 angeordneten Zustand des Schlosskastens 7 formschlüssig und/oder kraftschlüssig eingreift. Der Schlosskasten 7 nach Fig. 6 weist ferner an seiner der Brandschutzscheibe 2 in im Glasausschnitt 6 der Brandschutzscheibe 2 angeordneten Zustand des Schlosskastens 7 zugewandten, vertikal verlaufenden Außenseite 10 eine entsprechend ausgebildete Vertiefung 11 auf, in welche die mittlere Glasscheibe 3 der Brandschutzscheibe 2 in im Glasausschnitt 6 der Brandschutzscheibe 2 angeordneten Zustand des Schlosskastens 7 formschlüssig und/oder kraftschlüssig eingreift (hier nicht explizit dargestellt).

### Bezugszeichenliste:

- 1: Brandschutzglastür
- 2: Brandschutzscheibe
- 3: Glasscheibe (Brandschutzscheibe (2))
- 4: Brandschutzmaterial (Brandschutzscheibe (2))
- 5: Abstandhalter (Brandschutzscheibe (2))
- 6: Glasausschnitt (Brandschutzscheibe (2))
- 7: Schlosskasten
- 8: horizontale Außenseite (Schlosskasten (7))
- 9: Vertiefung (horizontale Außenseite (8))
- 10: vertikale Außenseite (Schlosskasten (7))
- 11: Aussparung (vertikale Außenseite (10))
- 11a: Vorsprung (Außenseite (8, 10) Schlosskasten (7))
- 12: halbschalenartiges Teil (Schlosskasten (7))
- 13: Einsteckschloss
- 14: Türdrücker
- 15: Falle (Einsteckschloss (13))
- 16: Schließzylinder
- 17: Riegel (Einsteckschloss (13))
- 18: Abdeckung/Verblendung
- 19: Schrauben
- 20: Bohrung (Schlosskasten (7))
- 21: Rundrosette
- 22: Seitenfläche (Brandschutzscheibe (2))
- 23: Seitenfläche (Schlosskasten (7))
- 24: Stirnfläche (Glasscheibe (3) (Brandschutzscheibe (2)))

## Patentansprüche

1. Brandschutzglastür (1) zur Vermeidung des Durchtritts von Feuer und/oder Rauch im Brandfall von einem Raum in einen anderen Raum,
mit
einer Brandschutzscheibe (2),
bestehend aus wenigstens zwei mittels eines Randverbunds parallel voneinander beabstandeten Glasscheiben (3) und wenigstens einem zwischen den wenigstens zwei Glasscheiben (3) angeordneten Brandschutzmaterial (4), und
einem
in einem Glasausschnitt (6) der Brandschutzscheibe (2) angeordneten Schlosskasten (7),
wobei der Randverbund der Brandschutzscheibe (2) zumindest in dem für den Schlosskasten (7) vorgesehenen Bereich des Glasausschnitts (6) der Brandschutzscheibe (2) wenigstens teilweise gegenüber der Stirnfläche (24) zumindest der äußeren zwei Glasscheiben (3) der Brandschutzscheibe (2) zurückspringt,
und
der Schlosskasten (7) an wenigstens einer seiner der Brandschutzscheibe (2) in im Glasausschnitt (6) der Brandschutzscheibe (2) angeordneten Zustand des Schlosskastens (7) zugewandten Außenseiten (8, 10) wenigstens zwei parallel voneinander beabstandete Aussparungen (11) und/oder Vertiefungen (9) aufweist,
in welchen die zumindest äußeren zwei Glasscheiben (3) der Brandschutzscheibe (2) in im Glasausschnitt der Brandschutzscheibe (2) angeordneten Zustand des Schlosskastens (7) formschlüssig und/oder kraftschlüssig aufgenommen sind.

2. Brandschutzglastür (1) nach Anspruch 1, **dadurch gekennzeichnet, dass** der Schlosskasten mit der Brandschutzscheibe (2) verklebt ist, vorzugsweise mit dem Randverbund der Brandschutzscheibe (2) und/oder den zumindest äußeren zwei Glasscheiben (3) der Brandschutzscheibe (2).

3. Brandschutzglastür (1) nach einem der Ansprüche 1 bis 2, **dadurch gekennzeichnet, dass** der Randverbund der Brandschutzscheibe (2) einen randseitig umlaufenden Abstandhalter (5) aufweist.

4. Brandschutzglastür (1) nach einem der Ansprüche 1 bis 3, **dadurch gekennzeichnet, dass** die in im Glasausschnitt (6) der Brandschutzscheibe (2) angeordneten Zustand des Schlosskastens (7) parallel zu den Seitenflächen (22) der Brandschutzscheibe (2) verlaufenden Außenseiten (23) des Schlosskastens (7) gegenüber den Seitenflächen (22) der Brandschutzscheibe (2) überstehen oder flächenbündig mit den Seitenflächen (22) der Brandschutzscheibe (2) abschließen.

5. Brandschutzglastür (1) nach einem der Ansprüche 1 bis 4, **dadurch gekennzeichnet, dass** die parallel zu den Seitenflächen (22) der Brandschutzscheibe (2) verlaufenden Außenseiten (23) des Schlosskastens (7) jeweils mit einer vorzugsweise im Wesentlichen plattenartig ausgebildeten Abdeckung bzw. Verblendung (18) versehen bzw. versehbar sind, wobei die Abdeckung bzw. Verblendung (18) den Schlosskasten (7) und vorzugsweise den Randverbund bzw. den Abstandhalter (5) der Brandschutzscheibe (2) im Bereich des Glasausschnitts (6) der Brandschutzscheibe (2) abdeckt bzw. verblendet.

6. Brandschutzglastür (1) nach Anspruch 5, **dadurch gekennzeichnet, dass** die Abdeckungen bzw. Verblendungen (18) mittels durch den Schlosskasten (7) hindurch geführten Schrauben (19) befestigbar sind, wobei sich die Abdeckungen bzw. Verblendungen (18) vorzugsweise mittels der Schrauben (19) gegeneinander an den Schlosskasten (7) und/oder die Brandschutzscheibe (2) klemmen.

7. Brandschutzglastür (1) nach einem der Ansprüche 1 bis 6, **dadurch gekennzeichnet, dass** der Schlosskasten (7) aus und/oder mit einem isolierenden bzw. wärmedämmendem und/oder hitzeabsorbierenden Material bzw. Baustoff gefertigt ist, vorzugsweise aus einer zementgebundenen Silikat-Brandschutzbauplatte.

8. Brandschutzglastür (1) nach einem der Ansprüche 1 bis 7, **dadurch gekennzeichnet, dass** der Schlosskasten (7) einteilig oder aus wenigstens zwei, vorzugsweise miteinander verklebten und/oder verschraubten Teilen (12) ausgebildet ist.

9. Brandschutzglastür nach einem der Ansprüche 1 bis 8, **dadurch gekennzeichnet, dass** der Schlosskasten (7) ein innenliegendes Einsteckschloss (13) aufweist.

10. Brandschutzglastür (1) zur Vermeidung des Durchtritts von Feuer und/oder Rauch im Brandfall von einem Raum in einen anderen Raum,
mit
einer Brandschutzscheibe (2),
bestehend aus drei parallel voneinander beabstandeten Glasscheiben (3) und einem zwischen den Glasscheiben (3) angeordneten Brandschutzmaterial (4), und
einem
in einem Glasausschnitt (6) der Brandschutzscheibe (2) angeordneten Schlosskasten (7),
wobei die mittlere Glasscheibe in dem für den Schlosskasten (7) vorgesehenen Bereich des Glasausschnitts (6) der Brandschutzscheibe (2) gegenüber den Stirnflächen der beiden äußeren Glasscheiben der Brandschutzscheibe vorspringt, derart, dass die Stirnfläche der mittleren Glasscheibe der Brandschutzscheibe (2) gegenüber den Stirnflächen der beiden äußeren Glasscheiben der Brandschutzscheibe (2) vorsteht,
und
der Schlosskasten (7) an wenigstens einer seiner der Brandschutzscheibe (2) in im Glasausschnitt (6) der Brandschutzscheibe (2) angeordneten Zustand des Schlosskastens (7) zugewandten Außenseiten (8, 10) jeweils eine Vertiefung (11) aufweist,
in welchen die mittlere Glasscheibe (3) der Brandschutzscheibe (2) in im Glasausschnitt der Brandschutzscheibe (2) angeordneten Zustand des Schlosskastens (7) formschlüssig und/oder kraftschlüssig eingreift.

11. Brandschutzglastür nach Anspruch 10, **dadurch gekennzeichnet, dass** die Brandschutzscheibe gemäß der sogenannten Wasserglas-Technologie ausgebildet ist.

## Claims

1. Fire-resistant glass door (1) for preventing the passage of fire and/or smoke from one room to another in the event of fire,
comprising
a fire-resistant pane unit (2),
consisting of at least two glass panes (3) spaced parallel from one another by means of an edge seal and at least one fire-resistant material (4) arranged between the at least two glass panes (3), and
a
lock case (7) arranged in a glass cutout (6) of the fire-resistant pane unit (2),
wherein
the edge seal of the fire-resistant pane unit (2), at least in the region of the glass cutout (6) of the fire-resistant pane unit (2) intended for the lock case (7), is at least partially recessed relative to the end face (24) of at least the outer two glass panes (3) of the fire-resistant pane unit (2),
and
the lock case (7) has at least two recesses (11) and/or depressions (9) spaced parallel from one another on at least one of its outer sides (8, 10) facing toward the fire-resistant pane unit (2) when the lock case (7) is arranged in the glass cutout (6) of the fire-resistant pane unit (2),
in which recesses and/or depressions the at least outer two glass panes (3) of the fire-resistant pane unit (2) are form-fittingly and/or force-fittingly received when the lock case (7) is arranged in the glass cutout of the fire-resistant pane unit (2).

2. Fire-resistant glass door (1) according to claim 1, **characterized in that** the lock case is bonded to the fire-resistant pane unit (2), preferably to the edge seal of the fire-resistant pane unit (2) and/or to the at least outer two glass panes (3) of the fire-resistant pane unit (2).

3. Fire-resistant glass door (1) according to either claim 1 or 2,
**characterized in that** the edge seal of the fire-resistant pane unit (2) has a spacer (5) running around the edge.

4. Fire-resistant glass door (1) according to any of claims 1 to 3,
**characterized in that** the outer sides (23) of the lock case (7), which extend parallel to the side surfaces (22) of the fire-resistant pane unit (2) when the lock case (7) is arranged in the glass cutout (6) of the fire-resistant pane unit (2), protrude from the side surfaces (22) of the fire-resistant pane unit (2) or are flush with the side surfaces (22) of the fire-resistant pane unit (2).

5. Fire-resistant glass door (1) according to any of claims 1 to 4,
**characterized in that** the outer sides (23) of the lock case (7), which extend parallel to the side surfaces (22) of the fire-resistant pane unit (2), are each provided or can be provided with a preferably substantially plate-like cover or facing (18), the cover or facing (18) covering or facing the lock case (7) and preferably the edge seal or the spacer (5) of the fire-resistant pane unit (2) in the region of the glass cutout (6) of the fire-resistant pane unit (2).

6. Fire-resistant glass door (1) according to claim 5, **characterized in that** the covers or facings (18) can be fastened by means of screws (19) passed through the lock case (7), the covers or facings (18) being preferably clamped against one another on the lock case (7) and/or the fire-resistant pane unit (2) by means of the screws (19).

7. Fire-resistant glass door (1) according to any of claims 1 to 6,
**characterized in that** the lock case (7) is made of and/or with an insulating or heat-insulating and/or heat-absorbing material or building material, preferably from a cement-bonded silicate fire-resistant building board.

8. Fire-resistant glass door (1) according to any of claims 1 to 7,
**characterized in that** the lock case (7) is formed in one piece or from at least two pieces (12) which are preferably bonded and/or screwed together.

9. Fire-resistant glass door according to any of claims 1 to 8,
**characterized in that** the lock case (7) has an internal mortise lock (13).

10. Fire-resistant glass door (1) for preventing the passage of fire and/or smoke from one room to another in the event of fire,
comprising
a fire-resistant pane unit (2),
consisting of three glass panes (3) spaced parallel from one another and a fire-resistant material (4) arranged between the glass panes (3), and
a
lock case (7) arranged in a glass cutout (6) of the fire-resistant pane unit (2),
wherein
the central glass pane, in the region of the glass cutout (6) of the fire-resistant pane unit (2) intended for the lock case (7), projects from the end faces of the two outer glass panes of the fire-resistant pane unit, such that the end face of the central glass pane of the fire-resistant pane unit (2) projects from the end faces of the two outer glass panes of the fire-resistant pane unit (2),
and
the lock case (7) has a recess (11) on at least one of its outer sides (8, 10) facing toward the fire-resistant pane unit (2) when the lock case (7) is arranged in the glass cutout (6) of the fire-resistant pane unit (2),
in which recess the central glass pane (3) of the fire-resistant pane unit (2) form-fittingly and/or force-fittingly engages when the lock case (7) is arranged in the glass cutout of the fire-resistant pane unit (2).

11. Fire-resistant glass door according to claim 10, **characterized in that** the fire-resistant pane unit is designed according to so-called water glass technology.

## Revendications

1. Porte vitrée coupe-feu (1) destinée à empêcher le passage du feu et/ou de la fumée d'une pièce à l'autre en cas d'incendie,
comportant
une vitre coupe-feu (2),
constituée d'au moins deux feuilles de verre (3) espacées parallèlement l'une de l'autre à l'aide d'un joint périphérique, et d'au moins un matériau coupe-feu (4) disposé entre les au moins deux feuilles de verre (3), et
un
boîtier de serrure (7) disposé dans une découpe de verre (6) de la vitre coupe-feu (2),
dans laquelle
le joint périphérique de la vitre coupe-feu (2), au moins dans la zone de la découpe de verre (6) de la vitre coupe-feu (2), laquelle zone est prévue pour le boîtier de serrure (7), est au moins partiellement en retrait par rapport à la face frontale (24) d'au moins les deux feuilles de verre (3) extérieures de la vitre coupe-feu (2),
et
le boîtier de serrure (7) présente, sur au moins l'un de ses côtés extérieurs (8, 10) tournés vers la vitre coupe-feu (2) lorsque le boîtier de serrure (7) est disposé dans la découpe de verre (6) de la vitre coupe-feu (2), au moins deux évidements (11) et/ou renfoncements (9) espacés parallèlement les uns des autres,
évidements et/ou renfoncements dans lesquels les au moins deux feuilles de verre (3) extérieures de la vitre coupe-feu (2) sont reçues par complémentarité de forme et/ou à force lorsque le boîtier de serrure (7) est disposé dans la découpe de verre de la vitre coupe-feu (2).

2. Porte vitrée coupe-feu (1) selon la revendication 1,
**caractérisée en ce que** le boîtier de serrure est collé à la vitre coupe-feu (2), de préférence au joint périphérique de la vitre coupe-feu (2) et/ou aux au moins deux feuilles de verre (3) extérieures de la vitre coupe-feu (2).

3. Porte vitrée coupe-feu (1) selon l'une des revendications 1 à 2,
**caractérisée en ce que** le joint périphérique de la vitre coupe-feu (2) présente un espaceur (5) périphérique côté bord.

4. Porte vitrée coupe-feu (1) selon l'une des revendications 1 à 3,
**caractérisée en ce que** les côtés extérieurs (23) du boîtier de serrure (7), qui s'étendent parallèlement aux faces latérales (22) de la vitre coupe-feu (2) lorsque le boîtier de serrure (7) est disposé dans la découpe de verre (6) de la vitre coupe-feu (2), dépassent par rapport aux faces latérales (22) de la vitre coupe-feu (2) ou se terminent à fleur des faces latérales (22) de la vitre coupe-feu (2).

5. Porte vitrée coupe-feu (1) selon l'une des revendications 1 à 4,
**caractérisée en ce que** les côtés extérieurs (23) du boîtier de serrure (7), lesquels côtés extérieurs s'étendent parallèlement aux faces latérales (22) de la vitre coupe-feu (2), sont respectivement pourvus ou peuvent être pourvus d'un élément de recouvrement ou d'un revêtement (18) de préférence sensiblement en forme de plaque, dans laquelle l'élément de recouvrement ou le revêtement (18) recouvre ou revêt le boîtier de serrure (7) et de préférence le joint périphérique ou l'espaceur (5) de la vitre coupe-feu (2) dans la zone de la découpe de verre (6) de la vitre coupe-feu (2).

6. Porte vitrée coupe-feu (1) selon la revendication 5,
**caractérisée en ce que** les éléments de recouvrement ou revêtements (18) peuvent être fixés à l'aide de vis (19) traversant le boîtier de serrure (7), dans laquelle les éléments de recouvrement ou revêtements (18) se serrent les uns contre les autres, de préférence à l'aide des vis (19), contre le boîtier de serrure (7) et/ou la vitre coupe-feu (2).

7. Porte vitrée coupe-feu (1) selon l'une des revendications 1 à 6,
**caractérisée en ce que** le boîtier de serrure (7) est fabriqué à partir de et/ou avec un matériau ou un matériau de construction isolant ou calorifuge et/ou absorbant la chaleur, de préférence à partir d'un panneau de construction coupe-feu à base de silicate lié au ciment.

8. Porte vitrée coupe-feu (1) selon l'une des revendications 1 à 7,
**caractérisée en ce que** le boîtier de serrure (7) est réalisé d'une seule pièce ou en au moins deux pièces (12), de préférence collées et/ou vissées ensemble.

9. Porte vitrée coupe-feu selon l'une des revendications 1 à 8,
**caractérisée en ce que** le boîtier de serrure (7) présente une serrure encastrée (13) interne.

10. Porte vitrée coupe-feu (1) destinée à empêcher le passage du feu et/ou de la fumée d'une pièce à l'autre en cas d'incendie,
comportant
une vitre coupe-feu (2),
constituée de trois feuilles de verre (3) espacées parallèlement les unes des autres et d'un matériau coupe-feu (4) disposé entre les feuilles de verre (3), et
un
boîtier de serrure (7) disposé dans une découpe de verre (6) de la vitre coupe-feu (2),
dans laquelle
la feuille de verre centrale fait saillie dans la zone de la découpe de verre (6) de la vitre coupe-feu (2), laquelle zone est prévue pour le boîtier de serrure (7), par rapport aux faces frontales des deux feuilles de verre extérieures de la vitre coupe-feu, de telle sorte que la face frontale de la feuille de verre centrale de la vitre coupe-feu (2) déborde par rapport aux faces frontales des deux feuilles de verre extérieures de la vitre coupe-feu (2),
et
le boîtier de serrure (7) présente, sur au moins l'un de ses côtés extérieurs (8, 10) tournés vers la vitre coupe-feu (2) lorsque le boîtier de serrure (7) est disposé dans la découpe de verre (6) de la vitre coupe-feu (2), respectivement un renfoncement (11),
renfoncement dans lequel la feuille de verre centrale (3) de la vitre coupe-feu (2) vient se loger par complémentarité de forme et/ou à force lorsque le boîtier de serrure (7) est disposé dans la découpe de verre de la vitre coupe-feu (2).

11. Porte vitrée coupe-feu selon la revendication 10, **caractérisée en ce que** la vitre coupe-feu est réalisée selon la technologie dite du verre soluble.
